# EUROPEAN PATENT SPECIFICATION

(11) **EP 2 058 829 B1**
(45) Date of publication and mention of the grant of the patent: **05.03.2014**
(21) Application number: 07120266.7
(22) Date of filing: 08.11.2007
(51) Int. Cl.: H01H 9/02

(54) **Wireless switch module**
Schaltmodul mit drahtloser Übertragung
Module de commutation à transmission sans fil

(43) Date of publication of application: 13.05.2009
(73) Proprietor: Unified Packet Systems Corp., Da-an District, Taipei 106 (TW)
(72) Inventor: Lin, Wei-Cheng, 106 Taipei (TW); Chen, Ho-Sung, 106 Taipei (TW)
(74) Representative: Viering, Jentschura & Partner Patent- und Rechtsanwälte

(56) References cited:
- EP-A- 1 450 383
- DE-A1- 4 312 614
- US-A1- 2004 188 231
- US-A1- 2007 227 867
- US-B1- 6 963 040

## Description

The present invention relates to a switch module, and more particularly to a wireless switch module, which can be switch "On" and "Off" via a mechanical means or a wireless digital control signal.

In the daily life, for controlling electrical apparatus or electronic devices on and off, a switch assembly is usually provided to be coupled with electrical apparatus and the electronic devices, so that a user can operate the switch button connected to the switch assembly to switch-control electrical apparatus and the electronic devices "On" and "Off".

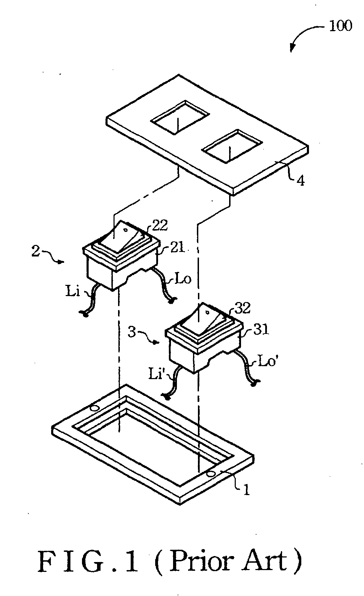

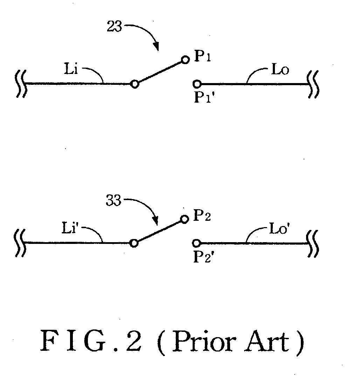

Basing on above description, a conventional embodiment is further disclosed to illustrate the prior arts as mentioned above. Please refer to FIG.1 and FIG. 2, wherein FIG. 1 illustrates two conventional switch cells being fitted with a frame and a covering board to form a switch assembly in prior arts, and FIG. 2 is a simplified circuit diagram illustrating the conventional switch cells being electrically connected to a power-in wire and a power-out wire. As shown in the figures, a frame 1 is applied for two switch cells mounted therein, and then covered with a covering board 4, so as to form a switch assembly 100.

The switch cell 2 comprises a main body 21, a switch button 22 and a switch circuit 23. The switch button 22 is connected to the main body 21; the switch circuit 23 is located within the main body 21, and usually mechanically connected with the switch button 22 via a flexible plate and a spring. Meanwhile, one end of the switch circuit 23 is usually connected to a power source (not shown) via a power-in wire Li, and the other end of the switch circuit 23 is usually connected to a first loading (not shown) via a power-out wire Lo; wherein the switch circuit 23 is provided with two contacts P1 and P1', and the first loading can be electrical apparatus or the electronic devices as mentioned.

Similarly, the switch cell 3 comprises a main body 31, a switch button 32 and a switch circuit 33. The switch button 32 is connected to the main body 31; the switch circuit 33 is located within the main body 31, and usually mechanically connected with the switch button 32 via a flexible plate and a spring. Meanwhile, one end of the switch circuit 33 is usually connected to a power source (not shown) via a power-in wire Li', and the other end of the switch circuit 33 is usually connected to a second loading (not shown) via a power-out wire Lo'; wherein the switch circuit 33 is provided with two contacts P2 and P2', and the second loading can be electrical apparatus or the electronic devices as mentioned.

When the user need to make the first loading under a loading condition, i.e., when the user need to operate electrical apparatus or electronic devices, he can switch the switch button 22 on, and then the contact P1 is connected to the contact P1' to form a closed circuit (not shown), so that the power source can supply a nominal electricity to electrical apparatus or the electronic devices to make the electrical apparatus or the electronic devices under the loading condition.

On the contrary, when the user need to make the second loading under an unloading condition, i.e., when the user need to turn off electrical apparatus or electronic devices, he can switch the switch button 32 off, and then the contact P2 is electrically separated from the contact P2' to form an open circuit (not shown), so that the power source interrupts supply the nominal electricity to electrical apparatus or the electronic devices to make the electrical apparatus or the electronic devices under the unloading condition.

From the prior arts as disclosed above, obviously, it still needs to switch control the switch circuit 23 or 33 "On" and "Off" via manual operation. However, under the consideration of convenience, or under some operation requirements, it is necessary to switch control the switch circuit 23 or 33 on or off. Thus, it is obvious that the conventional switch cell 2 or 3 cannot meet the requirements of wireless control.

US 2004/0188231 A1 describes an IA switch, comprising a base seat, circuit board and panel, wherein said base seat is connected to a connector, at least four holes connected respectively with power cords and Internet lines are disposed at a backside of said connector; said circuit board is integrated with a plug, chip, at least one relay and at least a button switch; said circuit board is combined with said connector at a front side thereof; said plug is combined with said connector at a front side thereof; said panel has holes corresponding to said button switches; the front ends of said button switches are projected out of said holes; and said panel is combined to an outside of said base seat.

EP-A-1450383 discloses a wireless switch module being fitted with a frame and a covering board so as to form a wireless switch assembly, the wireless switch module comprising: a first switch cell comprising a main body having a first switch circuit therein; a first switch button assembled to the first main body and connected to the first switch circuit so as to switch-control the first switch circuit "On" and "Off"; and a first relay coupled with the first switch circuit; a second switch circuit; a second switch button assembled to the main body and connected to the second switch circuit so as to switch-control the switch circuit "On" and "Off"; and a second relay coupled with the second switch circuit; a control unit having a control body for housing a micro control circuit therein, the micro control circuit being coupled with the relays and provided for switch-controlling the switch circuits "On" and "Off" via the relays after receiving and analyzing a wireless digital control signal.

Although many different wireless switch assemblies are presented in the market after the absence of the conventional switch assembly 100; while, there do still exist three major disadvantages. The first major disadvantage is that the wireless switch assemblies are not spatially compatible to the existed frame 1 and the covering board 4, so that the wireless switch assemblies cannot directly assemble to the existed frame 1 and the covering board 4 to replace the switch cells 3 and 4. The second major disadvantage is that the wireless switch assembly is controlled by a wireless analog signal, so that the wireless switch assembly is easier to be blind triggered by external wireless interference signals. The third major disadvantage is that the wireless switch module cannot be controlled to switch "On" or "Off" when the strength of the wireless digital control signal is insufficient to make it be effectively received by the wireless switch module. It is more important that the two disadvantages are still neither overcome, so that the wireless switch assembly has not been widely used yet.

Due to that there are three problems existing in the prior arts, such as the switch assembly cannot meet the requirements of wireless control, the wireless switch assembly cannot spatially compatible to the existed frame and the covering board, and the wireless switch assembly is easier to be blind triggered, the primary objective of the present invention provides a wireless switch module, which can be switch-controlled either via a mechanical means, or via a wireless digital control signal. Moreover, in spatial, the wireless switch module is compatible to the existed frame and the covering board, so as to directly replace the switch cell(s).

The secondary objective of the present invention provides a wireless switch module comprising a micro control circuit, so as to receive and analyze a wireless digital control signal to accordingly switch-control the switch circuit(s) within the wireless switch module "On" and "Off".

Another objective of the present invention provides a wireless switch module comprising a wireless signal transceiver. When a wireless digital control signal cannot be effectively received by a wireless module located in a remote end, the wireless digital control signal can be received and transmitted by other wireless switch modules, so as to indirectly transmit the wireless digital control signal to the wireless switch module located in the remote end.

Means of the present invention for solving the problems as mentioned above provides a wireless switch module according to claim 1.

Comparing with the conventional switch assembly, the wireless switch modules as provided in the present invention can be switch-controlled both via the switch button(s) and the wireless digital control signal; therefore, the present invention can meet the requirement of wireless control.

Comparing with the existing wireless switch assembly, the wireless switch modules as provided in the present invention can be directly connected to the existed frame and the covering board, and can be further electrically connected to a power source and at least one loading via at least one power-in wire and power-out wire. Therefore, both in spatial and electrical, the wireless switch module is compatible to the existed frame, covering board, power-in wire(s), power-out wire(s), so that the wireless switch module can directly replace the conventional switch cell(s).

In the present invention, except for receiving the wireless digital control signal, it is still necessary for the wireless switch module to execute a digital analysis to the wireless digital control signal, and then switch-control the switch circuit "On" and "Off" in accordance with the analysis result. Thus, the wireless switch module of the present invention can effectively prevent from being blind triggered by external wireless interference signals.

Nevertheless, in the preferred embodiment of the present invention, the micro control circuit further comprises a wireless signal transceiver. When a wireless digital control signal cannot be effectively received by a wireless module located in a remote end, the wireless digital control signal can be received and transmitted by other wireless switch modules, so as to indirectly transmit the wireless digital control signal to the wireless switch module located in the remote end. Therefore, it is obvious that the art of the present invention can control the wireless switch module located in the remote end via the indirectly transmission method.

The devices, characteristics, and the preferred embodiment of this invention are described with relative figures as follows.

The structure and the technical means adopted by the present invention to achieve the above and other objects can be best understood by referring to the following detailed description of the preferred embodiments and the accompanying drawings, wherein
FIG. 1 illustrates two conventional switch cells being fitted with a frame and a covering board to form a switch assembly in prior arts;
FIG. 2 is a simplified circuit diagram illustrating the conventional switch cells being electrically connected to a power-in wire and a power-out wire;
FIG. 3 illustrates the major elements of a wireless switch assembly and the connection relation thereof in accordance with a preferred embodiment of the present invention;
FIG. 4 illustrates the wireless switch modules can be directly mounted between the existed frame and covering board in accordance with the preferred embodiment of the present invention;
FIG. 5 illustrates a functional block diagram in accordance with the preferred embodiment of the present invention;
FIG. 6 illustrates that the wireless switch assembly can be assembled with an adapter to form an adapted-type wireless switch assembly; and
FIG. 7 illustrates that the wireless switch assembly can be assembled with an extension assembly to form an extension-type wireless switch assembly

Due to that the wireless switch module as provided in accordance with the present invention can be widely applied to control the switch circuit "On" and "Off', and further directly replace the conventional switch cell(s), the combined applications are too numerous to be enumerated and described, so that on the basis of the structure, only a preferred embodiment is disclosed as follows for representation.

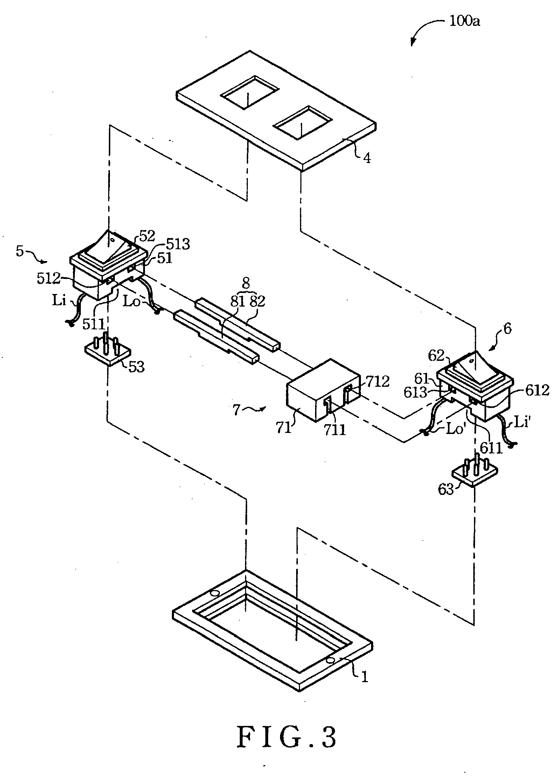

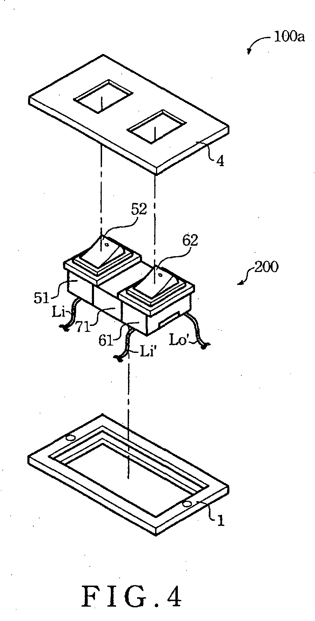

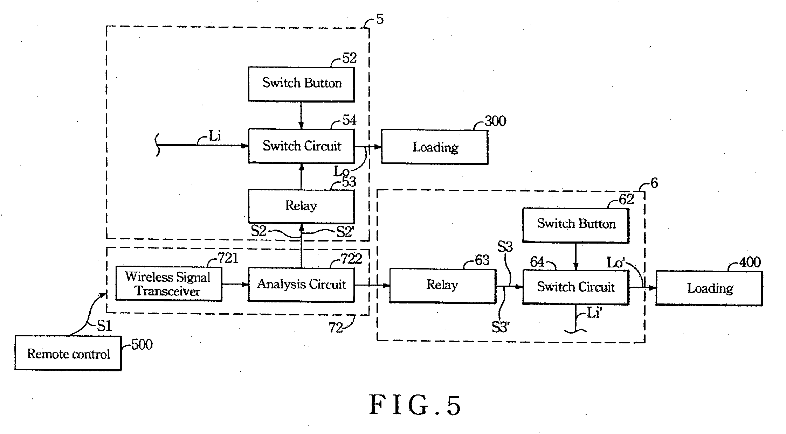

Please refer to FIG. 3 to FIG. 5, wherein FIG. 3 illustrates the major elements of a wireless switch assembly and the connection relation thereof in accordance with a preferred embodiment of the present invention; FIG. 4 illustrates the wireless switch modules can be directly mounted between the existed frame and covering board in accordance with the preferred embodiment of the present invention; and FIG. 5 illustrates a functional block diagram in accordance with the preferred embodiment of the present invention. As shown in the figures, the existed frame 1 is applied for a wireless switch module 200 mounted therein, and then covers with the existed covering board 4, so as to make a wireless switch assembly 100a. The wireless switch module 200 comprises two switch cells 5 and 6, a control unit 7 and a connection mechanism 8.

The switch cell 5 comprises a main body 51, a switch button 52, a relay 53 and a switch circuit 54. The bottom of the main body 51 is formed with a receiving groove 511, and the one side of the main body 51 facing to the switch cell 6 is formed with two assembling holes 512 and 513. The switch button 52 is connected to the main body 51. The switch circuit 54 is located within the main body 51 and usually connected mechanically with the switch button 52 via a flexible plate and a spring. The relay 53 is embedded in the receiving groove 511, and coupled with the switch circuit 54. Meanwhile, one end of the switch circuit 54 is connected to a power source (not shown) via the power-in wire Li, and the other end of the switch circuit 54 is connected to a loading 300 via a power-out wire Lo; wherein the loading 300 can be electrical apparatus or the electronic devices as mentioned.

Similarly, the switch cell 6 comprises a main body 61, a switch button 62, a relay 63 and a switch circuit 64. The bottom of the main body 61 is formed with a receiving groove 611, and the one side of the main body 61 facing to the switch cell 5 is formed with two assembling holes 612 and 613. The switch button 62 is connected to the main body 61. The switch circuit 64 is located within the main body 61 and usually connected mechanically with the switch button 62 via a flexible plate and a spring. The relay 63 is embedded in the receiving groove 611, and coupled with the switch circuit 64. Meanwhile, one end of the switch circuit 64 is connected to a power source (not shown) via the power-in wire Li', and the other end of the switch circuit 64 is connected to a loading 400 via a power-out wire Lo'; wherein the loading 400 can be electrical apparatus or the electronic devices as mentioned.

The control unit 7 comprises a control body 71 and a micro control circuit 72. Two guide grooves 711 and 712 are formed on the control body 71. The micro control circuit 72 comprises a wireless signal receiving circuit 721 and an analysis circuit 722, and the analysis circuit 722 is coupled with the wireless signal receiving circuit 721, the relay 53 and 63. The connection mechanism 8 consists of two connection bars 81 and 82. The connection bar 81 extends through the assembling hole 512, the guide groove 711 and the assembling hole 612, and the connection bar 82 extends through the assembling hole 513, the guide groove 712 and the assembling hole 613, so as to assemble the switch cell 5, 6 and the control unit 7 together.

In the present invention, it is able to switch-control the switch circuit 54 and 64 of the wireless switch assembly 100a "On" and "Off", and the mechanical means for switch-controlling the switch circuit 54 and 64 "On" and "Off" is the same as or similar to the means as applied in the prior arts. Thus, following up, only the technologies of switch-controlling the switch circuit 54 and 64 "On" and "Off" through wireless signal is disclosed.

As shown in FIG. 5, when a user uses a remote control 500 to send a wireless digital control signal S1, the wireless digital control signal S1 can be received by the wireless signal receiving circuit 721, transmitted the wireless digital control signal S1 to the analysis circuit 722, and analyzed by the analysis circuit 722, so as to control the relay 53 and 63 in accordance with an analysis result.

When the analysis result implies that switch on the switch circuit 54, a switch-on signal S2 can be transmitted to the relay 53, and the switch circuit 54 can be switched on via the relay 53, so that the power source can supply a nominal electricity to the loading 300 to make the loading 300 under a loading condition.

On the contrary, when the analysis result implies that switch off the switch circuit 54, a switch-off signal S2' can be transmitted to the relay 53, and the switch circuit 54 can be switched off via the relay 53, so that the power source interrupts supplying the nominal electricity to the loading 300 to make the loading 300 under an unloading condition.

Similarly, when the analysis result implies that switch on the switch circuit 64, a switch-on signal S3 can be transmitted to the relay 63, and the switch circuit 64 can be switched on via the relay 63, so that the power source can supply the nominal electricity to the loading 400 to make the loading 400 under a loading condition.

On the contrary, when the analysis result implies that switch off the switch circuit 64, a switch-off signal S3' can be transmitted to the relay 63, and the switch circuit 64 can be switched off via the relay 63, so that the power source interrupts supplying the nominal electricity to the loading 400 to make the loading 400 under an unloading condition.

After reading above description, people skilled in the ordinary art can easily realize the facts as follows.

First, when the wireless digital control signal S1 sent from the remote control 500 is replaced by a wireless analog control signal, it is necessary to additionally provide an A/D converter to transfer the wireless analog control signal to the wireless digital control signal S1.

Second, due to that the wireless digital control signal S1 sent from the remote control 500 belongs to a digital signal, it is able to make analysis circuit 722 exactly analyze the wireless digital control signal S 1 through proper encoding and decoding technologies, so as to prevent the wireless switch assembly 100a being blind triggered.

Third, the wireless switch module 200 can be directly mounted to the existed frame 1 and the covering board 4, and electrically connected to the power-in wires Li, Li', and the power-out wires Lo and Lo'. Therefore, no matter in the consideration of the compatibility in spatial or in electrical, the wireless switch module 200 can be directly applied to replace the conventional switch cell(s) to be assembled with the existed frame 1 and the covering board 4 to form a wireless switch assembly 100a, so as to directly upgrade the conventional switch assembly 100 to the wireless switch assembly 100a.

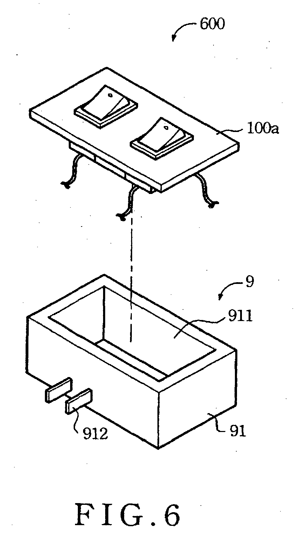

Following up, two portable applications of the preferred embodiment of the present invention will be further disclosed. Please refer to FIG. 6, which illustrates that the wireless switch assembly can be assembled with an adapter to form an adapted-type wireless switch assembly. Simultaneously, please refer to FIG. 4. As shown in the figures, an adapter 9 comprises an adapted-box 91 provided with a containing groove 911 and a plug assembly 912 thereof. The wireless switch assembly 100a can be further assembled to the containing groove 911 of the adapted-box 91, so as to form an adapted-type wireless switch assembly 600. The adapted-type wireless switch assembly 600 can be connected to an outlet (not shown) via the plug assembly 912.

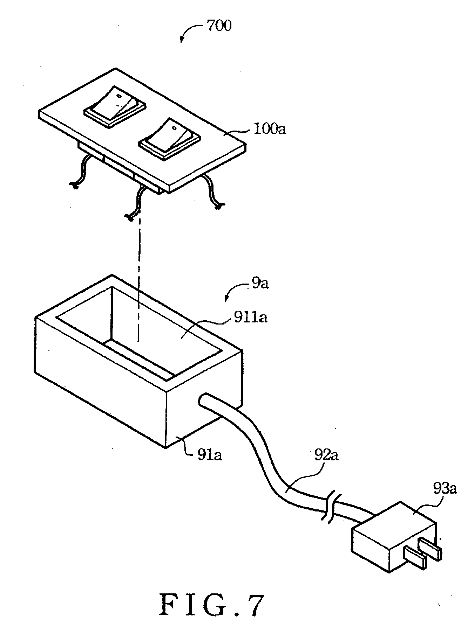

Please refer to FIG. 7, which illustrates that the wireless switch assembly can be assembled with an extension assembly to form an extension-type wireless switch assembly. Simultaneously, please refer to FIG. 4. As shown in the figures, an extension assembly 9a comprises an adapted-box 91 a, an extension wire 92a and a plug assembly 93a. The adapted-box 91a comprises a containing groove 911a. The extension wire 92a is respectively connected to the adapted-box 91a and the plug assembly 93a. The wireless switch assembly 100a can be further assembled to the containing groove 911a of the adapted-box 91a, so as to form an extension-type wireless switch assembly 700. The extension-type wireless switch assembly 700 can be connected to an outlet (not shown) via the plug assembly 93a.

## Claims

1. A wireless switch module being fitted with a frame (1) and a covering board (4) so as to form a wireless switch assembly (100a), the wireless switch module comprising:
a first switch cell (5) comprising:
a first main body (51) having a first switch circuit (54) therein, a first assembling hole (512) and a second assembling hole (513) located at a sidewall thereof and a first receiving groove (511) at a bottom thereof;
a first switch button (52) assembled to the first main body (51) and connected to the first switch circuit (54) so as to switch-control the switch circuit (54) "On" and "Off" ; and
a first relay (53) embedded in the first receiving groove (511) and coupled with the first switch circuit (54);
a second switch cell (6) comprising:
a second main body (61) having a second switch circuit (64) therein, a first assembling hole (612) and a second assembling hole (613) located at a sidewall thereof and a second receiving groove (611) at a bottom thereof;
a second switch button (62) assembled to the second main body (61) and connected to the second switch circuit (64) so as to switch-control the switch circuit (64) "On" and "Off" ; and
a second relay (63) embedded in the second receiving groove (611) and coupled with the second switch circuit (64);
a control unit (7) having a control body (71) for housing a micro control circuit (72) therein, the control body (71) being formed with a first guide groove (711) and a second guide groove (712) from one sidewall to an opposite sidewall of the control body (71), the micro control circuit (72) being coupled with the relays (53, 63) and provided for switch-controlling the switch circuits (54, 64) "On" and "Off" via the relays (53, 63) after receiving and analyzing a wireless digital control signal;
a first connection bar (81) placed in the first guide groove (711) having two ends extending through the control body (71) and the first assembling holes (512, 612) of the first and second main bodies (51, 61), respectively, so as to assemble the switch cells (5, 6) and the control unit (7) together; and
a second connection bar (82) placed in the second guide groove (712) having two ends extending through the control body (71) and the second assembling holes (513, 613) of the first and second main bodies (51, 61), respectively, so as to assemble the switch cells (5, 6) and the control unit (7) together.

2. The wireless switch module as claimed in claim 1, **characterized in that** the micro control circuit (72) comprises:
a wireless signal receiving circuit (721) for receiving the wireless digital control signal; and
an analysis circuit (722) coupled to the wireless signal receiving circuit (721) for analyzing the wireless digital control signal to accordingly switch-control the switch circuit (54) "On" and "Off" via the relay (53).

3. The wireless switch module as claimed in claim 1, **characterized in that** the switch circuit (54) is electrically connected to a power source and a loading respectively via a power-in wire (Li) and a power-out wire (Lo).

4. The wireless switch module as claimed in claim 1, **characterized in that** the wireless switch assembly (100a) is assembled to an adapter to form an adapted-type wireless switch assembly.

5. The wireless switch module as claimed in claim 1, **characterized in that** the wireless switch assembly (100a) is assembled to an extension assembly (9a) to form an extension-type wireless switch assembly (700).

## Patentansprüche

1. Ein drahtloses Schaltmodul, welches mit einem Rahmen (1) und einer Deckplatte (4) ausgestattet ist, um eine drahtlose Schalteinrichtung (100a) zu bilden, wobei das drahtlose Schaltmodul aufweist:
eine erste Schaltzelle (5), aufweisend:
einen ersten Hauptkörper (51), welcher einen ersten Schalterstromkreis (54) darin aufweist, sowie eine erste Montageöffnung (512) und eine zweite Montageöffnung (513), welche sich an einer Seitenwand davon befinden, und eine erste Aufnahmeöffnung (511) an einem Boden davon;
einen ersten Schaltknopf (52), welcher am ersten Hauptkörper (51) montiert und mit dem ersten Schalterstromkreis (54) verbunden ist, um den Schalterstromkreis (54) "an"- und "aus"-schaltzusteuem; und
ein erstes Relais (53), welches in die erste Aufnahmenut (511) eingebettet und mit dem ersten Schalterstromkreis (54) verbunden ist;
eine zweite Schaltzelle (6), aufweisend:
einen zweiten Hauptkörper (61), welcher einen zweiten Schalterstromkreis (64) darin aufweist, sowie eine erste Montageöffnung (612) und eine zweite Montageöffnung (613), welche sich an einer Seitenwand davon befinden, und eine zweite Aufnahmenut (611) an einem Boden davon;
einen zweiten Schaltknopf (62), welcher am zweiten Hauptkörper (61) montiert und mit dem zweiten Schalterstromkreis (64) verbunden ist, um den Schalterstromkreis (64) "an"- und "aus"-schaftzusteuern; und
ein zweites Relais (63), welches in die zweite Aufnahmenut (611) eingebettet und mit dem zweiten Schalterstromkreis (64) verbunden ist;
eine Steuerungseinheit (7), welche einen Steuerungskörper (71) aufweist, um einen Mikro-Steuerkreis (72) darin aufzunehmen, wobei der Steuerungskörper (71) mit einer ersten Führungsnut (711) und einer zweiten Führungsnut (712) von der einen Seitenwand zu einer gegenüberliegenden Seitenwand des Steuerungskörpers (71) ausgebildet ist, wobei der Mikro-Steuerkreis (72) mit den Relais (53, 63) verbunden ist und bereitgestellt ist, um die Schalterstromkreise (54, 64) mittels der Relais (53, 63) nach einem Empfangen und einem Analysieren eines digitalen Steuersignals "an"- und "aus"-schaltzusteuern,
einen ersten Verbindungsbalken (81), welcher in der ersten Führungsnut (711) angeordnet ist, welcher zwei Enden aufweist, welche sich durch den Steuerungskörper (71) und die ersten Montageöffnungen (512, 612) des ersten bzw. des zweiten Hauptkörpers (51, 61) erstrecken, um die Schaltzellen (5, 6) und die Steuerungseinheit (7) miteinander zu montieren; und
einen zweiten Verbindungsbalken (82), welcher in der zweiten Führungsnut (712) angeordnet ist, welcher zwei Enden aufweist, welche sich durch den Steuerungskörper (71) und die zweiten Montageöffnungen (513, 613) des ersten bzw. des zweiten Hauptkörpers (51, 61) erstrecken, um die Schaltzellen (5, 6) und die Steuerungseinheit (7) miteinander zu montieren.

2. Das drahtlose Schaltmodul gemäß Anspruch 1, **dadurch gekennzeichnet, dass** der Mikro-Steuerkreis (72) aufweist:
einen Drahtloses-Signal-Empfangsschaltkreis (721) zum Empfangen des drahtlosen digitalen Steuersignals; und
einen Analyseschaltkreis (722), welcher mit dem Drahtloses-Signal-Empfangsschaltkreis (721) verbunden ist, um das drahtlose digitale Steuersignal zu analysieren, um dementsprechend den Schalterstromkreis (54) mittels des Relais (53) "an"- und "aus"-schaltzusteuern.

3. Das drahtlose Schaltmodul gemäß Anspruch 1, **dadurch gekennzeichnet, dass** der Schalterstromkreis (54) mit einer Stromquelle und einer Last mittels eines Leistungseingangskabels (Li) bzw. eines Leistungsausgangskabels (Lo) elektrisch verbunden ist.

4. Das drahtlose Schaltmodul gemäß Anspruch 1, **dadurch gekennzeichnet, dass** die drahtlose Schalteinrichtung (100a) an einem Adapter montiert ist, um eine adapterartige drahtlose Schalteinrichtung zu bilden.

5. Das drahtlose Schaltmodul gemäß Anspruch 1, **dadurch gekennzeichnet, dass** die drahtlose Schalteinrichtung (100a) an einer Verlängerungseinrichtung (9a) montiert ist, um eine verlängerungsartige drahtlose Schalteinrichtung (700) zu bilden.

## Revendications

1. Module de commutateur sans fil doté d'un cadre (1) et d'un panneau de recouvrement (4) de manière à former un ensemble commutateur sans fil (100a), le module commutateur sans fil comprenant :
une première cellule de commutateur (5) comprenant :
un premier corps principal (51) présentant à l'intérieur un premier circuit de commutateur (54), un premier trou d'assemblage (512) et un deuxième trou d'assemblage (513) situés au niveau d'une paroi latérale de celui-ci et une première rainure de réception (511) située au niveau du fond de celui-ci ;
un premier bouton de commutateur (52) assemblé sur le premier corps principal (51) et connecté au premier circuit de commutateur (54) de manière à commander le commutateur « Marche » et « Arrêt » du circuit de commutateur (54) ; et
un premier relais (53) intégré dans la première rainure de réception (511) et couplé au premier circuit de commutateur (54) ;
une deuxième cellule de commutateur (6) qui comprend :
un deuxième corps principal (61) présentant à l'intérieur un deuxième circuit de commutateur (64), un premier trou d'assemblage (612) et un deuxième trou d'assemblage (613) situés au niveau d'une paroi latérale de celui-ci et une deuxième rainure de réception (611) située au niveau du fond de celui-ci ;
un deuxième bouton de commutateur (62) assemblé sur le deuxième corps principal (61) et connecté sur le deuxième circuit de commutateur (64) de manière à commander le commutateur « Marche » et « Arrêt » du circuit de commutateur (64) ; et
un deuxième relais (63) intégré dans la deuxième rainure de réception (611) et couplé au deuxième circuit de commutateur (64) ;
une unité de commande (7) présentant un corps de commande (71) destiné à loger à l'intérieur un microcircuit de commande (72), le corps de commande (71) étant formé avec une première rainure de guidage (711) et une deuxième rainure de guidage (712) à partir d'une paroi latérale jusqu'à une paroi latérale opposée du corps de commande (71), le microcircuit de commande (72) étant couplé aux relais (53, 63) et prévu pour commander le commutateur « Marche » et « Arrêt » des circuits de commutateurs (54, 64) par l'intermédiaire des relais (53, 63) après la réception et l'analyse d'un signal de commande numérique sans fil ;
une première barre de connexion (81) placée dans la première rainure de guidage (711) présentant deux extrémités s'étendant à travers le corps de commande (71) et les premiers trous d'assemblage (512, 612) des premier et deuxième corps principaux (51, 61), respectivement, de manière à assembler les cellules de commutateur (5, 6) et l'unité de commande (7) ensemble ; et
une deuxième barre de connexion (82) placée dans la deuxième rainure de guidage (712) présentant deux extrémités s'étendant à travers le corps de commande (71) et les deuxièmes trous d'assemblage (513, 613) des premier et deuxième corps principaux (51, 61), respectivement, de manière à assembler les cellules de commutateur (5, 6) et l'unité de commande (7) ensemble.

2. Module de commutateur sans fil selon la revendication 1, **caractérisé en ce que** le microcircuit de commande (72) comprend :
un circuit de réception de signal sans fil (721) destiné à recevoir le signal de commande numérique sans fil ; et
un circuit d'analyse (722) couplé au circuit de réception de signal sans fil (721) destiné à analyser le signal de commande numérique sans fil de manière à commander en conséquence le commutateur « Marche » et « Arrêt » du circuit de commutateur (54) par l'intermédiaire du relais (53).

3. Module de commutateur sans fil selon la revendication 1, **caractérisé en ce que** le circuit de commutateur (54) est connecté électriquement à une source d'alimentation et à une charge, respectivement, par l'intermédiaire d'un câble d'alimentation d'entrée (Li) et d'un câble d'alimentation de sortie (Lo).

4. Module de commutateur sans fil selon la revendication 1, **caractérisé en ce que** l'ensemble commutateur sans fil (100a) est assemblé sur un adaptateur pour former un ensemble commutateur sans fil du type adapté.

5. Module de commutateur sans fil selon la revendication 1, **caractérisé en ce que** l'ensemble commutateur sans fil (100a) est assemblé sur un ensemble extension (9a) pour former un ensemble commutateur sans fil du type extension (700).
